# EUROPEAN PATENT SPECIFICATION

(11) **EP 3 687 024 B1**
(45) Date of publication and mention of the grant of the patent: **19.08.2026**
(21) Application number: 19153932.9
(22) Date of filing: 28.01.2019
(51) Int. Cl.: H02J 7/00, B25F 5/00

(54) **AN ELECTRICAL APPARATUS, A POWER SYSTEM, A POWER TOOL, A NETWORK OF POWER TOOLS AND A POWER TOOL CONTROLLER**
ELEKTRISCHE VORRICHTUNG, STROMSYSTEM, ELEKTROWERKZEUG, NETZ AUS ELEKTROWERKZEUGEN UND ELEKTROWERKZEUGSTEUERGERÄT
APPAREIL ÉLECTRIQUE, SYSTÈME D'ALIMENTATION, OUTIL ÉLECTRIQUE, RÉSEAU D'OUTILS ÉLECTRIQUES ET ORGANE DE COMMANDE D'OUTILS ÉLECTRIQUES

(30) Priority: 26.01.2019 HK 18101326
(43) Date of publication of application: 29.07.2020
(73) Proprietor: Techtronic Outdoor Products Technology Limited, Hamilton HM12 (BM)
(72) Inventor: Fauteux, Denis Gaston, Kwai Chung (HK); Lee, Hei Man, Kwai Chung (HK); Cheung, Ngai, Kwai Chung (HK)
(74) Representative: Zimmermann & Partner Patentanwälte mbB

(56) References cited:
- EP-A2- 3 061 407
- WO-A1-2017/087855
- US-A1- 2001 043 203
- US-A1- 2005 166 413
- US-A1- 2014 240 125
- US-A1- 2015 267 934
- US-A1- 2017 269 167
- US-A1- 2018 168 021

## Description

### TECHNICAL FIELD

The present invention relates to the use of an electrical apparatus, in particular a power tool for switching a battery charger to a rapid charging mode and shows examples for an electrical apparatus, a power tool and a power system, and particularly, although not exclusively, to a power tool or a power device built-in with a wireless communication interface.

### BACKGROUND

Apparatus such as power tools and power systems may be used in different environments and for different purposes. For example, cutting tools and lighting equipment may be used in premises renovation sites, lawnmowers and trimmers may be used in gardens, vacuum cleaner may be used in indoor area to perform cleaning or the disposal of waste.

US 2015/267934 A1 discloses a method of controlling the CPU performance or the rotation speed of a fan and an electronic device performing the method in order to avoid excessive heat emitted from the electronic device or excessive noise emitted from the electronic device.

US 2001/043203 A1 refers to a notebook-type personal computer wherein the operation mode of the personal computer is switched into a low power consumption mode even while the screen saver function is activated. A display apparatus used in such a notebook-type personal computer is arranged by a display screen for displaying thereon image data sent from a main apparatus; memory means for storing thereinto screen protecting image data; and display control means for displaying the screen protecting image data stored in the memory means on the display screen under such a condition that the main apparatus is not actually operated for a predetermined time period.

US 2005/166413 A1 shows an apparatus and a method for a robot CMM arm with exoskeleton for performing accurate measurement and operations.

WO 2017/0878855 A1 describes a distributed power network which includes a power bus infrastructure distributed over a region with node points provided to interface with controllable power nodes. Each power node can be connected to an external power device such as a DC power source, a DC power load or a rechargeable DC battery. The power nodes form a communication network and cooperate with each other to receive input from DC power sources and/or rechargeable batteries connected to the power bus infrastructure and distribute the power received therefrom to the power bus infrastructure for distribution to the DC power loads and to rechargeable DC batteries. Each power node communicates with each other power node to share information about its local environment.

WO 2017/075547 A1 discloses a system of light devices and/or power tools including a first light device and a second light device wherein the first and the second light device each comprise a housing, a light, a transceiver and an electronic processor. The electronic processor of the first light is configured to control operation of the first light and to transmit, via the first transceiver, a command to the second light device.

US 2014/240125 A1 describes a tool monitoring system including a tool, a satellite, a cellular network antenna, a smart phone, the Internet, a wireless router, a personal computer and a tool monitoring server. The tool monitoring system allows a user to monitor status, usage and position information of the tool and send messages or block the tool when the tool is removed from a specific site.

US 2017/269167 A1 discloses trigger pull tracking, charge time estimation, and other features for a power tool battery pack with wireless communication. A battery pack system includes a power tool battery pack and a processor. The battery pack includes a plurality of cells and a voltage sensor connected to the plurality of cells. The processor is in communication with the voltage sensor that detects a voltage across the plurality of cells using the voltage sensor. The processor further converts the voltage across the plurality of cells to a state of charge; determines a charge rate of a charger charging the battery pack; and determines a conversion factor based on the charge rate. The processor then generates a time to full charge of the battery pack based on the state of charge, the charge rate, and the scalar conversion factor. The processor may further generate current traces for the battery pack.

EP 3061407 A2 shows an apparatus that comprises a handle module that is attachable to a detachable shaft module for collectively performing a surgical procedure, and an inspection station for connection to the handle module when the handle module is not being used in a surgical procedure. The handle module comprises a rotary drive system for driving the detachable shaft module, an electric motor coupled to the rotary drive system for powering the rotary drive system, and a handle module processor circuit in communication with the motor. The inspection station comprises an inspection station processor circuit that communicates with the handle module processor circuit via a data connection when the handle module is connected to the inspection station. The inspection station further comprises a display in communication with the inspection station processor circuit for displaying information about handle module.

Despite the availability of power tools in the market place, and the strong possibility that many power tool users will have more than one power tools, there is nonetheless little connectivity between each of these power tools. Attempts have been made by different manufacturers to find a common platform between the tools so as to assist the users, such as by the sharing of batteries amongst a different set of tools, but apart from the minor conveniences of sharing batteries, such common platforms do not enhance a user's experience in any significant manner.

Additionally, the usage patterns of individual users are rarely captured in the work environment, resulting in important usage data of power tools to be missed by Engineers who would otherwise find such work patterns helpful in their design of power tools. Despite the fact that connectivity is common with smartphones and other electronic devices and even the development of "apps" for user to interact with, users rarely has the time to interact with these apps to input their usage patterns, and thus opportunities to obtain a user's feedback on specific power tools are often lost.

### SUMMARY OF INVENTION

The invention is set out in the appended claims.

In accordance with a first aspect which is useful to illustrate the present invention, there is provided an electrical apparatus comprising a controller module arranged to control an output of a functional module of the electrical apparatus, wherein the controller module is further arranged to communicate with an external communication device.

In an example of the first aspect, the controller module comprises a single controller or processor unit.

In an example of the first aspect, the controller or processor unit is arranged to process communication signals transmitted to and/or received from the external communication device.

In an example of the first aspect, the controller module further comprises an antenna arranged to facilitate a communication with the external communication device.

In an example of the first aspect, the antenna is integrated on a circuit board of the controller module with the controller or processor unit mounted thereon.

In an example of the first aspect, the functional module includes a motor arranged to drive an operation member of the electrical apparatus.

In an example of the first aspect, the motor includes a brushless motor.

In an example of the first aspect, the controller module is arranged to control a rotational output of the brushless motor.

In an example of the first aspect, the functional module includes at least one battery cell.

In an example of the first aspect, the controller module is arranged to control an electrical output of a battery assembly including the at least one battery cell.

In an example of the first aspect, the controller module includes a battery management system.

In an example of the first aspect, the functional module includes a battery charging circuit.

In an example of the first aspect, the battery charging circuit is housed in a battery charger arranged to charge or recharge a battery assembly.

In an example of the first aspect, the functional module includes at least one sensor element.

In an example of the first aspect, the sensor element includes at least one of a temperature sensor, a humidity sensor, a wind level sensor, a soil quality sensor and a light intensity sensor. These sensors may be used for sensing the environment and may communicate with the other modules in order to control or give a better feedback, and the detection results may be further provided to the cloud service or central server for various data analysis purposes.

In an example of the first aspect, the functional module further includes a notification module arranged to provide a user of the electrical apparatus with a notification based on one or more detection result obtained by the sensor element.

In an example of the first aspect, the notification includes a suggestion or a recommendation of replacing or acquiring additional power tools and/or components so as to improve the working environment, such as but not limited to a workspace with a better air quality.

In an example of the first aspect, the controller module is arranged to communicate through at least one of Bluetooth, Wi-Fi, cellular network, ZIGBEE, RFID, radio wave, acoustic wave, sonic wave and optical wave.

In an example of the first aspect, the electrical apparatus includes at least one of a power tool, a gardening tool, a floor care apparatus, a power system, an energy storage apparatus and a battery charger.

In accordance with a second aspect not according to the invention and present for illustration purposes only, there is provided a power system comprising a plurality of power devices arranged to connect to a communication network, so as to exchange information associated with an operation of each of the power devices; wherein the plurality of power devices are arranged to operate based on the exchanged information.

In an example of the second aspect, each of the power devices is further arranged to operate based on an operation profile assigned to the plurality of power devices within the communication network, wherein the operation profile is determined based on the information associated with the operation of the plurality of power devices.

In an example of the second aspect, an overall loading power of the plurality of power devices is distributed among the plurality of power devices based on the operation profile.

In an example of the second aspect, the exchanged information includes an operation rating of each of the plurality of power devices, and wherein the operation profile includes a load balancing operation profile according to the operation rating of the plurality of power devices.

In an example of the second aspect, the operation rating includes an output power rating of each of the plurality of power devices.

In anexample of the second aspect, the exchanged information includes a real-time operation parameter of each of the plurality of power devices, the operation profile includes a load balancing operation profile according to the real-time operation parameter of the plurality of power devices.

In an example of the second aspect, the real-time operation parameter includes at least one of an output voltage, an output current, a capacity and an operation temperature of each of the plurality of power devices.

In an example of the second aspect, one of the plurality of power devices is arranged to operate as a master device, the master device is arranged to determine the operation profile based on the exchanged information, and to communicate the determined operation profile to other power devices within the communication network.

In an example of the second aspect, each of the plurality of power devices is arranged to operate individually based on the exchanged information.

In an example of the second aspect, the communication network includes a wireless network.

In an example of the second aspect, the plurality of power devices are electrically connected.

In an example of the second aspect, the plurality of power devices include at least one of a power generator, a power inverter and a battery.

In an example of the second aspect, the plurality of powerdevices includes at least one electrical apparatus in accordance with the first aspect.

In accordance with a third aspect not according to the invention and present for illustration purposes only, there is provided a network of power tools comprising: a plurality of power tools, each having a communication interface arranged to connect to one another to exchange and communicate operational data; wherein the connection between the one or more power tools is formed by the communication interface of each of the power tools.

In an example of the third aspect, the communication interface of each of the power tools is arranged to at least connect directly with each other to exchange and communicate operational data between each of the power tools in the network.

In an example of the third aspect, the operational data exchanged and communicated between each of the power tools include data associated with the usage or operation of the power tool.

In an example of the third aspect, the operational data exchanged and communicated between each of the power tools include controlling commands arranged to control each of the power tools.

In an example of the third aspect, the operational data is exchanged or communicated upon authentication of the power tools connected to one another.

In an example of the third aspect, the operational data is communicated to a cloud service.

In an example of the third aspect, the cloud service is arranged to analyse the operational data to identify power tool operation patterns.

In an example of the third aspect, a first power tool is connected to a second power tool is arranged such that when the first power tool is triggered to operate, the second power tool is also triggered to operate.

In an example of the third aspect, at least one of the plurality of power tools include an electrical apparatus in accordance with the first aspect.

In accordance with a fourth aspect to illustrate the present invention, there is provided a power tool comprising a controller arranged to control the operation of the power tool, wherein the controller includes a communication interface arranged to facilitate communication between the controller and a controller of another power tool.

In an example of the fourth aspect, the communication between the controller and another controller of another power tool includes a direct communication protocol whereby the controller is able to communicate directly with a controller of another power tool without any communication intermediary.

In an example of the fourth aspect, the communication between the controller and the controller of another power tool includes operational data.

In an example of the fourth aspect, the operational data includes data associated with the usage or operation of the power tool.

In an exampleof the fourth aspect, the communication between the controller and the controller of another power tool includes control data.

In an example of the fourth aspect, the control data includes controlling commands arranged to control each of the power tools.

In an example of the fourth aspect, the power tool includes an electrical apparatus in accordance with the first aspect.

In accordance with a fifth aspect to illustrate the present invention, there is provided a power tool controller comprising: a microcontroller (MCU) arranged to facilitate operation of the power tool when one or more commands are received from an input; wherein the MCU includes a recording circuit arranged to record the operation and status of the power tool; and a communication interface connected to the MCU, the communication interface being arranged to communicate directly with another power tool.

In an example of the fifth aspect, the communication interface is further arranged to communicate directly with another power tool without a communication intermediary.

In an example of the fifth aspect, the communication interface is arranged to communicate the operation and status of the power tool to another power tool.

In an example of the fifth aspect, the communication interface is arranged to transmit or receive controlling commands to control the power tool or another power tool.

In an example of the fifth aspect, the communication interface is further arranged to communicate with electronic communications devices, including smartphones, routers, hubs, switches, telecommunications carriers, cloud services or any one or combination thereof.

In an example of the fifth aspect, the power tool controller is included in the control module of the electrical apparatus in accordance with the first aspect.

Any of the optional features discussed above in relation one of the aspects of the invention may, where appropriate, be applied to one of the other aspects of the inventions.

### BRIEF DESCRIPTION OF THE DRAWINGS

Examples of the present invention will now be described, by way of example, with reference to the accompanying drawings in which:
Figure 1 is an illustration showing an example electrical apparatus in accordance with one example of the present invention;
Figure 2 is an illustration showing an electrical apparatus of Figure 1 and a number of external devices in a wireless communication network;
Figure 3 is an illustration showing an example of a power tool operating with a network-enabled battery assembly in accordance with an example of the present invention;
Figure 4 is an illustration showing a power system including a plurality of linked power devices in accordance with an example of the present invention;
Figure 5 is a block diagram of an example power tool controller arranged to facilitate tool to tool connection to form a mesh network of power tools in accordance with one example of the present invention;
Figure 6 is a diagram illustrated an example of a mesh network connecting different nodes;
Figure 7 is adiagram illustrating an example of multiple mesh networks connected together; and
Figure 8 is an example screenshot of an example interface for an example of a tool to tool automation system arranged to operate on a mesh network of power tools.

### DETAILED DESCRIPTION OF THE PREFERRED EMBODIMENT

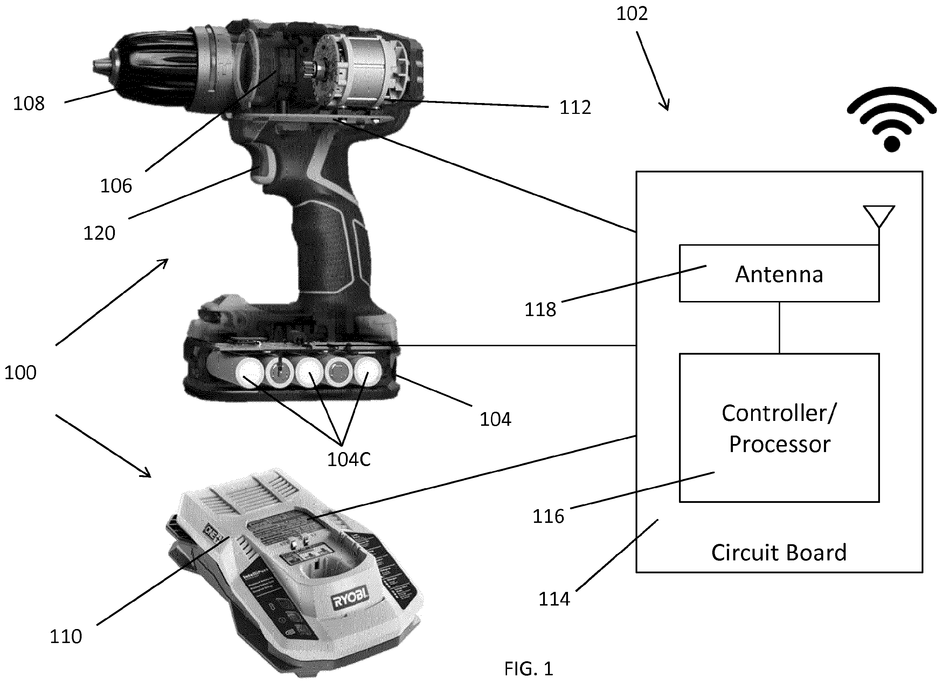

With reference to Figure 1, there is shown an embodiment of an electrical apparatus 100 comprising a controller module 102 arranged to control an output of a functional module of the electrical apparatus 100, wherein the controller module 102 is further arranged to communicate with an external communication device.

In this embodiment, the electrical apparatus is a power tool such as a portable electric drill/driver 100. The power tool 100 includes a battery pack 104 which may be removably mounted to a main body 106 of the power tool 100 and is used to energize movable components such as drill bits being mounted to the chuck 108 of the drill/driver. The power tool 100 may also include a battery charger 110 which may be used to recharge the removable/replaceable battery pack 104.

Preferably, the battery pack 104 may be a part of the functional module of the electrical apparatus 100. In this example, the battery pack 104 includes multiple battery cells 104C storing sufficient energy which may be supplied to the motor 112 of the power tool 100. For example, rechargeable battery cells such as Ni-Cd, Ni-MH, lithium-ion, lithium polymer or any other rechargeable type of cells may be included in the battery assembly 104. Alternatively, the battery pack or the battery assembly 104 may include a single battery cell in some other electrical apparatus, or the battery cells may be non-rechargeable, but replaceable in some embodiments.

The electrical output is preferably managed by the controller module 102 of the power tool 100, which may include a circuit board 114 or logic board in the battery pack 104. Preferably, the circuit board may be mounted with electronic components such as transistors, switches, inductors, resistors and capacitors, and may operate as a battery management system for controlling or converting the electrical output of the battery assembly 104 for driving the motor 112, and the motor 112 in turn drives the movable components 108 of the power tool 100. The battery management system 102 may also be responsible for other battery-related operations such as but not limited to over-charging/discharging protection, voltage/current monitoring and temperature sensing.

The battery management system 102 may also comprise a controller or processor unit 116 which may facilitate more precise controlling/monitoring functions or operations of the battery assembly 104. For example, the circuit board 114 may be mounted with a logic unit 116 such as but not limited to a microprocessor, a microcontroller, a digital signal processor (DSP), a filed-programmable gate array (FPGA) or a programmable logic device (PLD). Such controller or processor unit 116 may be used to process the signals provided by the battery cells 104C and the sensors so as to control the operations of the electronic components provided in the controller module 102.

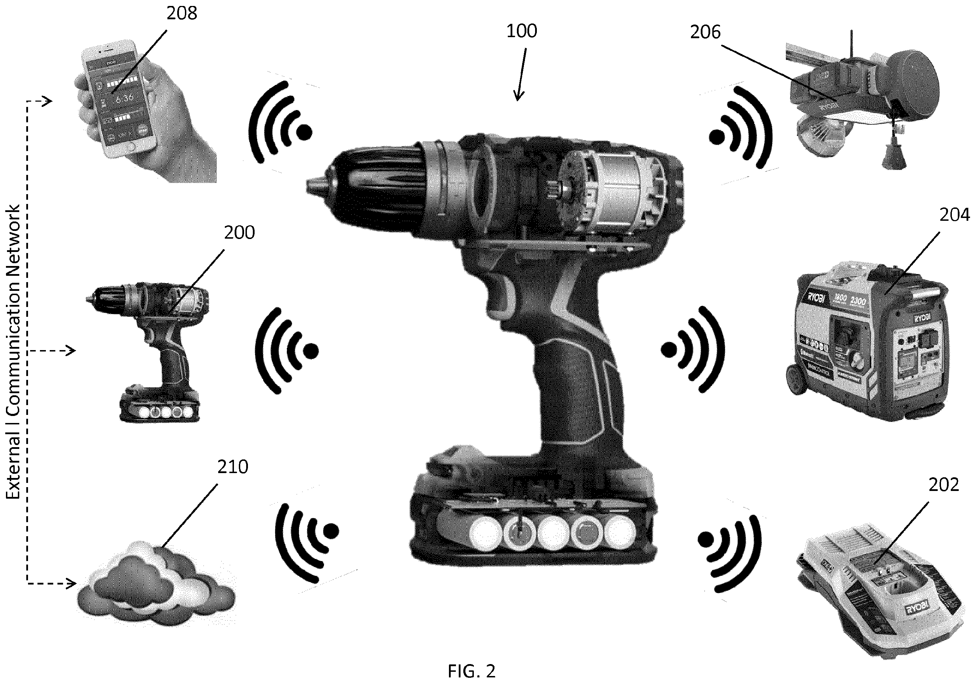

With reference also to Figure 2, the electric drill/driver 100 may communicate with an external communication device or another apparatus such as a battery charger 202, a power system 204, lighting equipment 206, another electric drill/driver 200, a smartphone 208 or computing device and/or a cloud service/server 210 directly or indirectly via an external communication network (such as internet). Preferably, the controller or processor unit 116 is arranged to process the communication signals transmitted to and/or received from these external communication devices, and the controller module 102 may comprise only a single controller or processor unit 116 which may be configured to process both the battery monitoring/controlling signals as well as the communication signals, therefore may be used to facilitate the battery management and the communication between the power tool 100 and an external communication device.

Preferably, the electrical apparatus may communicate with the external device via a wireless communication network or linkage, such as but not limited to Bluetooth, Wi-Fi, cellular network (e.g. GSM/EDGE/HSPA/LTE/WiMAX) including 2G, 3G, 4G or NB-IoT communication network, ZIGBEE, RFID, other any communication technology utilizing radio wave, acoustic wave, sonic wave and optical wave.

In addition, the electrical apparatus 100 may also be provided with one or more antenna 118 as well as any necessary electronic components for the communication interface. The antenna may facilitate the wireless communication with the external communication device. Preferably, the antenna 118 may be integrated on the circuit board 114 of the controller module 102, such as by defining the antenna structure on the printed circuit board 114 which has the controller or processor unit 116 mounted thereon. Alternatively, the antenna may be provided separately on other parts of the electrical apparatus 100 which may be connected to the circuit board 114 or the controller unit 116 when the battery assembly 104 is secured in the main body 106 of the electrical apparatus 100.

For example, the electric drill/driver 100 may communicate, via a Bluetooth (low-energy) network to a paired battery charger 202 indicating a battery-low status of the battery pack 104 being mounted to the drill/driver 100, which may trigger the charger 202 to switch to a rapid charging mode of operation for recharging another battery pack currently being mounted to the charger 202. Alternatively or additionally, the battery-low status may also be transmitted to a smartphone 208 via a cloud service 210 (or vice versa) which may notify the operator of the drill/driver 100 through a computing device.

The operator may also control the drill/driver 100 via a paired smartphone 208 or a wireless remote controller (not shown) via the wireless communication interface in the battery assembly 104. For example, the user may transmit a command to disable the drill/driver 100, and the processor unit 116 in the battery management system 102 may process the signal and in turn deactivates the drill/driver 100 by disabling the electrical output of the battery assembly 104 or by disabling the movable components (such as the motor 112) of the drill/driver 100 through control signals being transmitted via the terminals of the battery assembly 104.

In another example, the drill/driver 100 may communicate or pair with one or more of the external devices and may be configured to operate according to the status of each of these external devices. For example, with reference to Figure 2, the drill/driver 100 may be configured to activate only if the lighting equipment 206 is on and the charger 202 is recharging a battery assembly. This may ensure that the drill/driver 100 may only be operated in a sufficiently illuminated environment and that at least one recharged supplementary battery pack will be ready for use after the drill/driver 100 has been used for a certain period of time. The paring or the dependencies of the operation of different power tools and/or external devices may be different in some other examples based on different requirements.

With reference back to Figure 1, in an alternative embodiment, the controller module 102 may be provided in the main body 106 of the power tool 100, and the functional module may include the motor 112 for driving the operation member (such as the chuck 108) of the drill/driver 100. In this example, the controller module 102 includes a logic board or a circuit board 114 which may also include a controller or processor unit 116 arranged to control the output of the function module. For example, the circuit board 114 may control the rotational output of the motor 112 in response to the actuation of the trigger 120 being pressed or released by the user. Alternatively or additionally, the circuit board 114 may also sense or monitor the operation status of the power tool 100, such as to monitor the electrical/mechanical input/output parameters thereby ensuring a normal operation of the power tool 100.

Preferably, the motor 112 of the functional module in this example may be a brushless motor, which may require precise control signals fed from a controller in its operation. Instead of implementing a communication interface to the circuit board or the battery management system in the removable battery pack 104, the controller or processor unit 116 on the circuit board 114 for controlling the brushless motor 112 may be deployed with the communication interface to facilitate the communication between external communication devices and the drill/driver 100. Similarly, a single controller or processor unit may be included in the controller module 102, in which the controller 116 may be used to both controlling the rotational output of the (DC) brushless motor 112 of the drill/driver 100 as well as processing the communication signals between the power tool 100 and the external communication device(s).

Additionally or optionally, the controller module 102 may also include an antenna 118 which may be integrally form on the motor controlling circuit board 114 or separately connected to the circuit board.

In yet another embodiment, instead of deploying the communication interface in the motor controller circuit board or the battery management system in the battery pack 104, the functional module includes a battery charging circuit which may also include a controller unit 116 for controlling the charging current and voltage across the battery pack 104 being recharged. Similarly, a single controller or processor unit may be included in the controller module 102 or the battery charging circuit, in which the controller 116 may be used to both controlling the charging current/voltage as well as processing the communication signals between the power tool and the external communication device(s).

Alternatively, the charging circuit may be housed in a battery charger 110 arranged to charge or recharge the battery assembly 104. In this embodiment, the battery charger 110 may communicate with external communication devices, or the main body 106 of the power tool 100 may communicate indirectly through the control module 102 of the battery charger 110. For example, data associated with the operation of the power tool 100 may be transmitted to and stored in the battery assembly 104 when the battery pack is mounted to the main body 106 of the power tool 100, and such data may be further transmitted to the battery charger 110 when the battery assembly 104 is unplugged from the main body 106 and being recharged by the charger 110, which may be further transmitted to an external communication device such as a smartphone 208 or a cloud service 210 via the communication interface in the battery charger 110.

In another example, firmware update package for the power tool 100 may be stored in the battery charger 110 which may be transmitted to and stored in the battery pack 104 during a recharging process, and therefore the firmware of the power tool 100 may be updated when the battery pack 104 is then mounted to the main body 106 of the power tool 100.

Alternatively or additionally, the functional module may also include at least one sensor element.

The sensor element may include different sensors which may be useful in determining a working condition of an environment, which may include at least one of a temperature sensor, a humidity sensor, a wind level sensor, a soil quality sensor and a light intensity sensor.

These sensors may detect one or more parameters associated with the environment and may communicate with the other modules in order to control or give a better feedback, for example to operate an indoor air purifier in a turbo operation mode whenever the air quality sensor in a power tool detects poor air quality within a workspace due to a generation of debris or dust particles during an operation of the power tool. In another example, a temperature feedback mechanism may be triggered to control an air-conditioner to lower the temperature of the working environment if two or more power tools within such environment detect an ambient temperature exceeding a predetermined threshold.

In addition, the detection results may be further provided to the cloud service or central server for various data analysis purposes. For example, the functional module may further include a notification module arranged to provide a user of the electrical apparatus with a notification based on one or more detection result obtained by the sensor element.

In one example, the notification may provide a warning to the user in relation to poor air quality or high temperature/humidity of the working environment, which may cause undesirable health issues if the user continues to work within the workspace. In another example, the notification module may provide a battery- low/fuel-low warning to the user before the power tool runs out of power.

Alternatively, notifications such as a suggestion or a recommendation of replacing or acquiring additional power tools and/or components so as to improve the working environment may be provided to the operator of the power tool(s). For example, a notification may be sent from a cloud service to the user's smartphone concerning a suggestion to the user to improve the air quality of the workspace by acquiring an air purifier or a vacuum cleaner including the recommended models of the air purifier or the vacuum cleaner.

In an alternative example, the cloud service may push notification to the notification module for sending advertisement, notification or discount messages to the user when a particular tool is determined to be approaching an end of its life cycle based on the operation data submitted to the cloud service, which may in turn encourage the user to purchase new tools and be prepared for future usage.

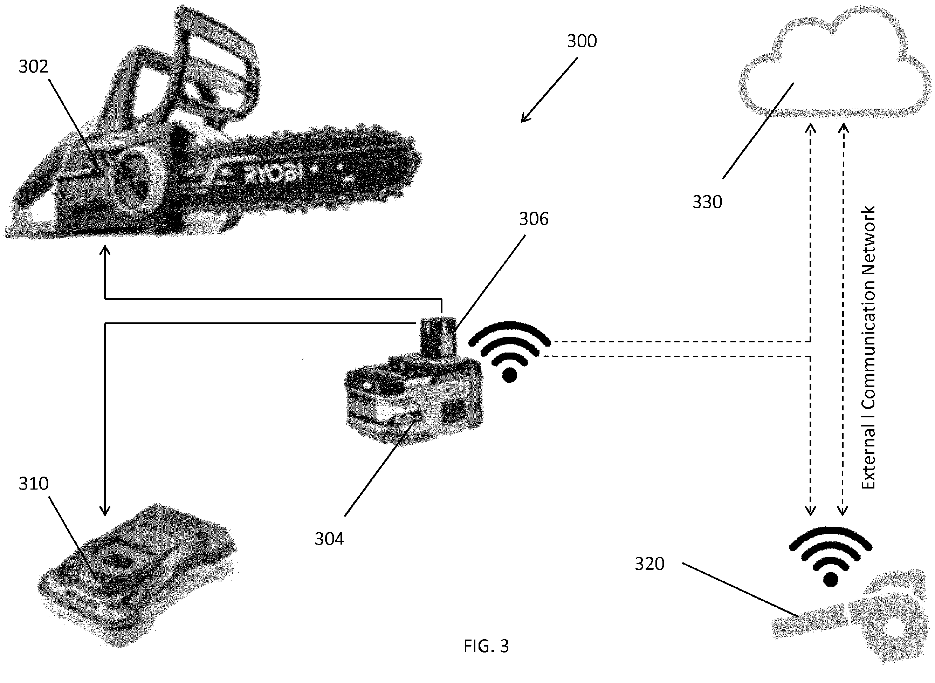

With reference to Figure 3, there is shown an alternative example of electrical apparatus 300 which include a chain saw 302. In this example, the battery pack 304 is built with the communication interface, which may be similar to the controller module 102 or the battery management system of the battery assembly 104 as discussed earlier. Preferably, the battery pack 304 may communicate with external devices such as a blower 320 which may also a similar communication interface, or the battery pack 304 may communicate with a cloud service or an external server 330, or the battery pack 304 may communicate with the blower 320 via the cloud service 330 and an external communication network (such as the internet), and vice versa. Preferably, the communication network or linkage between the cloud service 330 and/or the blower 320 is wireless, which may be implemented with a Bluetooth protocol or more preferably a Bluetooth mesh-network topology, or some other example network protocol such as a cellular network.

On the other hand, the linkage between the battery pack 304 and the chainsaw 302 or the battery charger 310 may be realized by wired connections, i.e. when the terminals 306 of the battery pack 304 is electrically connected to the corresponding terminals in the chainsaw 302 or the battery charger 310. The data transmission between the chainsaw/charger and the battery pack 304 may be modulated or encoded in the supplied voltage/current from the battery pack 304, or dedicated connection bus or pins may be provided to facilitate data transmissions between the two.

In this example, the chain saw 302 may be provided with a communication function when the chain saw 302 is mounted with such wirelessly-enabled battery pack 304. Therefore the wirelessly-enabled chain saw 302 may be paired with one or more external devices to exchange data associated with the operation of multiple devices or apparatus. In addition, the firmware of the charger/chain saw may be conveniently updated in theses examples. For example, the chain saw 302 may fetch a firmware update package through the communication interface provided in the battery assembly 304 over a wireless connection to the cloud service 330 or an OTA firmware update server, and the firmware package may then be transmitted to the chain saw 302 through the battery terminals 306.

In some alternative examples, the electrical apparatus may be a power tool, a gardening tool, a floor care apparatus, a power system, an energy storage apparatus or a battery charger, which may include a spray device selected from the group consisting off a paint sprayer, a water sprayer, an insecticide sprayer, a fertilizer sprayer, a power sprayer and a high pressure sprayer, a garden care device selected from the group consisting of a mowing device, a blowing device, a trimming device, a lawn mower, a leaf blower, a grass trimmer, a tree trimmer, a hedge trimmer, an edger and a mulcher, a power tool selected form the group consisting of a sander, a finisher, a fastener, a cutting device, a drill, a grinder, a screwdriver, a jackhammer, a nail or fastener gun, a lathe, a pneumatic wrench, a pneumatic clamp, an expansion tool, a crimper, a polisher, a router, a pneumatic hammer, an impact hammer, a knockout tool and a coring tool, a cutting device selected from the group consisting of a circular saw, a band saw, a chainsaw, a reciprocating saw, a table saw, a radial arm saw, a rotary saw, a miter saw, a concrete saw, an abrasive saw, a jig saw, a scroll saw, shears, a cutter, a cut out tool, a nibbler and a laser leveler, an applicator selected from the group consisting of a paint applicator, a glue applicator and a soldering iron, a motor selected from the group consisting of an electrical power generator, a winch and a hoist.

Alternatively or additionally, the electrical apparatus may also include at least one of a vacuuming device selected from the group consisting of a wet vacuum, a dry vacuum, a hand vacuum and a mulcher/vacuum, a heating device selected from the group consisting of a gas or an electric heater, a space heater, a blow dryer and a fan heater, a lighting device selected form the group consisting of a cordless light, a LED light, a hand held light, a spotlight, an area light, a flood light, a tower light, a helmet light, a belt light, a harness light and a room light, a sound device selected from the group consisting of a megaphone, a microphone, a speaker, a radio, a cell phone and a walkie-talkie, or a combination of any of these example devices as aforementioned.

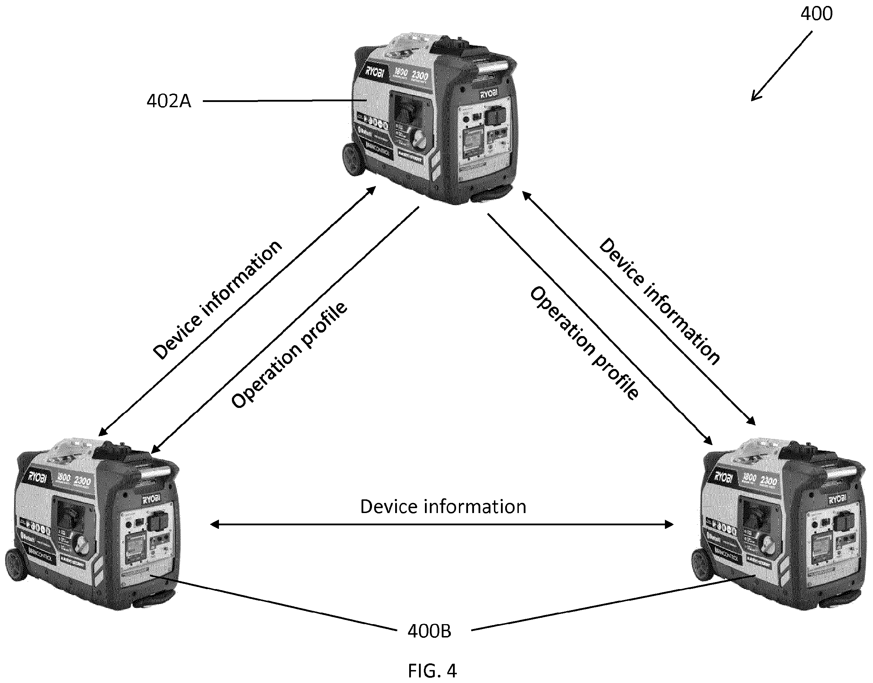

With reference to Figure 4, there is shown an example of a power system 400 comprising a plurality of power devices 402 arranged to connect to a (wireless) communication network or to form a communication network during an operation of the power system 400. The power devices 402 may exchange information associated with an operation of each of the power devices 402, and the plurality of power devices 402 are arranged to operate based on the exchanged information.

In this example, three power inverters 402 are arrange to communicate with each other, for example by utilizing the wireless communication (such as Bluetooth) interface deployed in the control module in each of the power inverters 402 to form a communication linkage between each of the pairs as discussed in some of the previous examples/embodiments. Alternatively, the power inverters 402 may include a communication module for establishing the required linkages or connection to the network, or at least a portion of the network may rely on wired or physical connections. As appreciated by a person skilled in the art, a different number of power devices of the same type or different types may be included to form the power system in other examples.

Preferably, each of the power devices 402 is arranged to operate based on an operation profile assign to the plurality of power device 402 within the communication network, wherein the operation profile is determined based on the information associated with the operation of the plurality of power devices 402.

Without wishing to be bound by theory, the inventors devise that AC/DC Power supply devices (such as battery / inverter / and all other devices which may output electrical current or voltage) are designed or implemented with a limited power output capability or a predetermined operation rating. One possible option to achieve a higher power capacity is to link several power devices together (such as parallel / serial / combination matrix), so the total power output may be shared among linked devices without overloading each of the linked devices.

For example, an overall loading power of the plurality of power devices 402 may be distributed among the plurality of power devices 402 based on the operation profile, such that the overall loading power may be maximized. For example, referring to Figure 4, the three power inverters 402 or power generators may be designed with different output ratings such as 1000 kW and 2000 kW. The power system may operate to output an overall loading power of 4000 kW which may be shared by two 1000 kW inverters 402B and one 2000 kW inverter 402A all being connected in parallel. Each of the power inverters 402 may communicate with each other so as to exchange device information, including an operation rating of each of the power devices in the network. Other information such as fuel gauge, current limitations or maximum capacity of each of the devices may also be exchanged.

To maximize the possible output power, based on mutual communication, an optimized operation profile including a load balancing operation profile for each of the inverters may be determined. Accordingly, the three inverters 402 will distribute AC power loading not equally, instead the power may be distributed according to the operation rating or the output power rating of individual power inverters 402, i.e. the 2000 kW inverter 402A output power 2X than the 1000 kW inverters 402B do so as to output an overall loading power of 4000 kW.

Other device operation profile or strategy may include, for example, a synchronized output frequency and period cycle of the AC power devices, decreasing or turning off a local power output of the desired power device so as to balance power grid loading distribution / cool down temperature / replenish fuel / activating protection means, or turning on or increasing local power output of the desired power device so as to balance power grid loading distribution / fill in power deficiency as a result of a decrease of power output of other device(s) within the network.

In an alternative example, the exchanged information includes a real-time operation parameter of each of the plurality of power devices 402, the operation profile may include a load balancing operation profile according to the real-time operation parameter of the plurality of power devices 402. the real-time operation parameter may include at least one of an output voltage, an output current, a capacity and an operation temperature of each of the plurality of power devices 402.

For example, five units of DC battery linked in parallel in which each of the batteries may be charged with different full charged voltage may be included in a power system. Base on mutual communication and the operation profile determined, the one with higher voltage may be discharged first until the real-time voltage drops close to other batteries in the network, and then all the batteries with similar voltage may be discharged at the same time based on an updated operation profile.

Alternatively or additionally, each of the power devices may collect SOC information from other power devices, which allows an estimation of total battery group SOC / remaining run time for user reference.

Other information related to the operation of the power system may also be shared within the communication network, such as but not limited to electrical voltage/current/power, fuel gauge, SOH, AC frequent, temperature, time to fuel replenish to full, time to depleted, protection or auto off parameters, device profile parameters, user manual activities, user predefined working profiles, etc. The information may also include time-dependent variation of these factors or parameters.

Preferably, the operation profile may be determined based on a centralized and/or decentralized topology. For example, in a centralized topology, one of the plurality of power devices, such as the power inverter 402A, may operate as a master device or a data center. Upon receiving device information provided by other power inverters 402B in the network, the master device 402A may determine the operation profile based on the exchanged information, and may communicate the determined operation profile to other power devices 402B within the communication network. In this example, the master device 402A or the data center may operate as a coordinator which commands all the peripheral power devices 402B within the communication network. Alternatively, the master device may be other functional devices such as a central remote controller which monitors and coordinates the operations of each of the power inverters 402.

In another example, each of the plurality of power devices 402 is arranged to operate individually based on the exchanged information in a decentralized topology. All the devices 402A/B in the network may operate as equal nodes, and all the nodes may exchange device information with all other nodes of the same network. Upon receiving device information from other nodes, each of the power devices 402 may determine an operation profile based on the exchanged information and may then operate according to the determined operation profile. Each of the power devices 402 may also share or provide commands associated with the determined operation profiles to other nodes in the same network.

In both the examples of the centralized and decentralized topologies, each of the power devices 402 may also ignore or reject the commands from other devices within the same network instead of operating according to the received commands or operation profile determined. Each of the devices 402 may also provide feedbacks to other devices when upon receiving commands or operation profile therefrom.

These examples and embodiments may be advantageous in that the electrical apparatus may be provided with a communication capability, which allows multiple apparatus to be connected and cooperate, or the apparatus may be connected to a cloud service or any smart or computing devices easily through a wireless network. The users may remotely access and operate any of the network-enabled devices using different electrical apparatus or devices.

Advantageously, the communication interface may be deployed in an existing circuit board and controller unit in different types of power tool or electrical apparatus, including one or more of the battery management system in the battery pack, the charging circuit in a battery charger or built in the power tool, the control circuit for controlling the operation of a DC brushless motor or a logic board for controlling different components in the power tool. This may eliminate the need of additional controller or processor unit in an add-on module such as a Bluetooth module or a Wi-Fi module in some other examples. Therefore the size, weight, compactness as well as the complexity of and the cost for manufacturing the power tool may be further reduced.

It may also be advantageous that existing apparatus or equipment may be "upgrade" to have a wireless connectivity by installing a battery assembly deployed with the communication interfaces, which may allow tools or apparatus of older models to operate with the new tools being manufactured. This may lower the cost of replacing old but healthy tools to work with the new communication protocols or cloud services provided by the manufacturer of the power tools.

In addition, by introducing a wireless connectivity among multiple power devices, operation of a power system consisting of multiple power devices may be optimized. The power devices may communicate with each other to exchange device information and real-time operating parameters such that the operation of each of the devices may be optimized to deliver a better utilization of the individual power devices each working as a component of the entire power system. Therefore, a more efficient and reliable power system may be deployed based on the network-enable power devices.

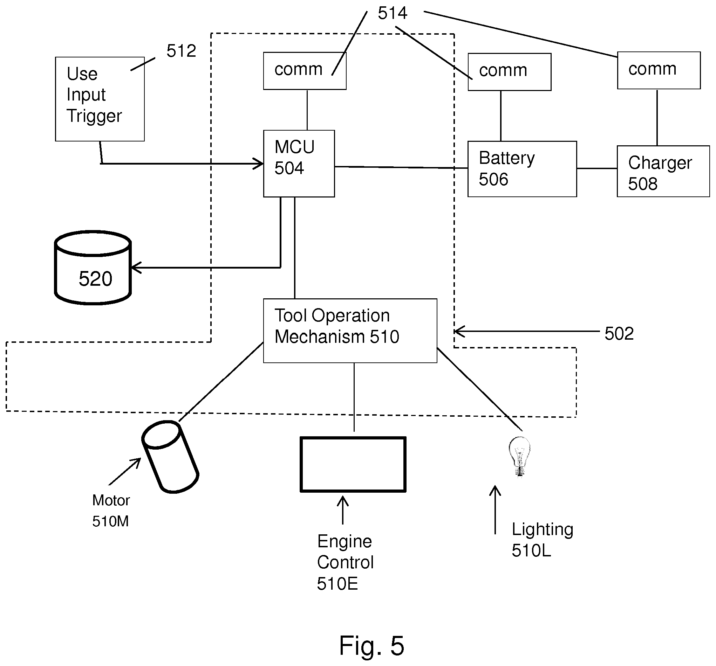

With reference to Figure 5, there is illustrated a block diagram of a power tool controller 502 comprising: a microcontroller (MCU) 504 arranged to facilitate operation of the power tool when one or more commands are received from an input; wherein the MCU 504 includes a recording circuit arranged to record the operation and status of the power tool; and a communication interface 514 connected to the MCU 504, wherein the communication interface 514 is arranged to communicate directly with another power tool.

In this example, the power tool controller 502 is an electronic or electrical arrangement arranged to control and operate a power tool. Preferably, the controller 502 has a microcontroller (MCU) 504, which is an electronic or logic based programmed circuit implemented to operate the power tool. In one example, the MCU 504 would receive a user input 512, usually in the form of an electronic signal provided via a switch or analogue to digital converter and in turn process this input to determine a user command.

Once the user command is determined, the MCU 504 may then operate the tool by directing energy to operate a tool operation mechanism 510. This tool operation mechanism 510 may be an electric motor 510M which drives the working parts of the tool, or various lights or lighting 510L if the tool is a light or has various required lighting arrangements, or if the tool is a fossil fuel powdered tool, such as a gasoline driven chainsaw or lawn mower, or a diesel powered generator, then an engine management unit or engine controller 510E, such as a fuel injection system, engine computer, throttle body, etc, may be actuated by the MCU 504 to control the engine.

As illustrated in this example,the MCU 504 may also be implemented to record the operational data of the power tool. This operational data, may include, without limitation:
- the current and historical operation of the tool, such as the speed/load of the tool;
- the duration of use, the time of day in which it is used;
- the battery or fuel level;
- the type of tool it is and its core functions;
- the ambient or component temperature;
- the state or level of any consumables that the tool may use as part of its operation;
- surrounding environmental temperatures detected by on board or external sensors, such as humidity, temperature, lighting, wind direction, air quality, electromagnetic frequencies, radiation, etc;
- warnings or alerts; and,
- specific requests to other power tools.

The operational data may be stored by the MCU 504 on a storage module 520 such as a memory module and may be accessed and analysed by an MCU 504 or another computing device to determine the usage and condition of the power tool.

In order to energize the MCU 504 and the components of the power tool which requires electrical power, a battery 506, usually in the form of a rechargeable battery may also be electronically connected to the MCU 504. This is so that the MCU 504 can direct electrical energy to the driving components of the power tool such as the tool operation mechanisms 510 as described earlier. Additionally, the battery 506 may also be electrically connected to a battery charger 508 so as to charge the battery 506 when the tool is not in use.

As shown in Figure 5, the MCU 504 is connected to a communication interface 514 which provides for connection and communications with other electronic devices, such as other power tools, portable computers, cloud based servers, or smartphones. Preferably, the communication interface 514 is arranged to at least connect and communicate with another power tool's communication interface 514 directly, that is, without the necessity for the connection and communication to take place between the two power tool's via any communication intermediary such as a hub, switch, router or any networking or telecommunications carrier. However, as preferred or desired by a user, the communication interface 514 may also be implemented to include such additional communication arrangements to communicate with a communication intermediary when this is necessary or preferred. Such additional communication arrangements may include communication hardware which support wireless communication protocols such as RFID, Bluetooth, Zigbee, WiFi, cellular networks (2G, 3G, 4G NB-IoT, LTE, EDGE, etc) or other wired communication protocols such as USB.

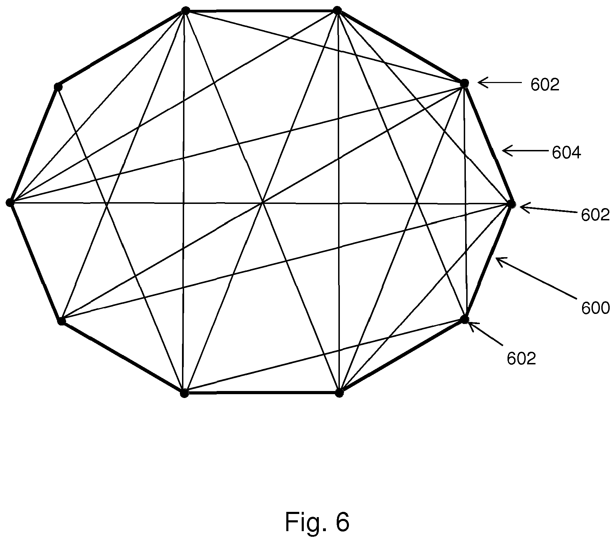

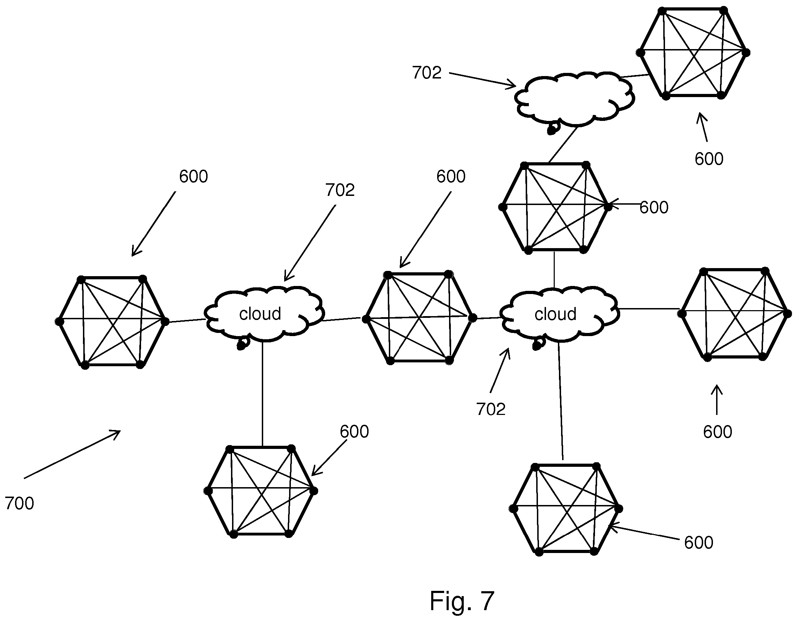

Thus in a further example, the communication interface 514 may be implemented to operate so as to connect directly with another power tool without any communication intermediary in between the power tools, and thus effectively forming a local mesh network which will be described in further details below with reference to Figures 6 and 7. However, preferably, the communication interface is also arranged to include communications arrangements so as to allow the communication interface to communicate with a smartphone or a computer, or directly with a telecommunications provider via a wired connection, or preferably, a wireless connection such as Bluetooth, RFID, Zigbee, WiFi or cellular networks, with the communications interface 514 choosing in between the different communication protocols based on availability, quality of service, and user settings.

The communication interface 514 may also be implemented to allow for control signals to be directed to the MCU 504 so as to allow remote control of the power tool without immediate user input. Such control signals may come from a remote control interface, such as those of a web interface or app interface on an authorized user's smartphone or computer, or alternatively, the control signals may also come from that of another power tool to coordinate the operations of multiple authorized power tools so as to facilitate co-ordinated operation of multiple power tools that are in possession by a user.

As shown, the communication interface 514 may also, in some examples, be implemented to connect directly with the battery 506 or the battery charger 508 of the power tool. In these instances, it is possible to have just one communication interface 514 or multiple communication interfaces 514 on a power tool when the battery 506 is installed with the power tool or if the power tool and battery 506 is being charged (connected) with the charger 508. An operation protocol may be implemented such that any overlapping communications in one specific power tool may allow a specific communication interface 514 to be temporarily disabled until such time that it is suitable for reactivation. An example of this arrangement may be that when a power drill is in operation, the communication interface 514 in the battery 506 may be temporarily switched off from further wireless communication and thus allowing the communication interface 514 of the MCU 504 to handle all of the necessary communications. However, the wireless communication of the battery's 506 communication interface 514 may then be reactivated once the battery 506 is disconnected from the power tool.

Referring to Figure 6, there is illustrated a topology diagram of a network of power tools 600 in accordance with one example. In this example, each node 602 of the network 600 is an example of a power tool which includes a communication interface 514 arranged to at least connect and communicate with another power tool's communication interface 514 directly, that is, without the necessity for the connection and communication to take place between the two power tool's via any communication intermediary such as a hub, switch, router or any networking or telecommunications carrier. However, as preferred, the communication interface 514 may also be implemented to include such a communication arrangement to communicate with a communication intermediary when this is necessary or preferred.

As shown in Figure 6, as each of the power tools, shown as nodes 602 are able to connect and communicate with another power tool (nodes 602) directly, a power tool would therefore be able to connect and form a communication link 604 with another power tool 602 provided the two power tools are within a communication range. In examples where the communication interfaces uses a communication protocol, such as Bluetooth or Bluetooth Low Energy (BLE), tools that are within a radius of 1 kilometre (less depending on geography and structural limitations) would be able to communicate together to form a connection. In turn, when all of the tools are connected together, a mesh network of power tools 600 is formed. Preferably, each of the tools may operate as an extension of communication linkage between tools in any distance within the mesh network, thereby allowing tools extending beyond the 1 kilometre distance to communicate with each other.

Within this mesh network 600, the power tools may exchange various information with each other, including, but without limitations, operational data and control data. In this example, operational data may include, without limitation:
- the current and historical operation of the tool, such as the speed/load of the tool;
- the duration of use, the time of day in which it is used;
- the battery or fuel level;
- the type of tool it is and its core functions;
- the ambient or component temperature;
- surrounding environmental temperatures detected by on board or external sensors, such as humidity, temperature, lighting, wind direction, air quality, electromagnetic frequencies, radiation, etc;
- the state or level of any consumables that the tool may use as part of its operation;
- warnings or alerts; and,
- specific requests to other power tools.

The exchange of these operational data between the power tools may facilitate superior communications amongst the power tools and thus its users. As an example, a user may use a power drill to perform a certain task, and as the power drill is able to communicate its operational data with a second drill resting within the user's tool box, the drills are able to exchange each other's operational data and in turn, allow for a calculated reminder to the user to switch drills for the task due to the convenience of sharing the workload between the two drills .

In another example, a power drill may detect that the load that is being exerted thereon is too high or too low, and thus may recommend for a more suitable alternative drill accessible by the user to work on the work piece. In this example, a first power drill being used by a user may exchange operational data with a second power drill belonging to the user and together, based on the exchange of information, determine that the second power drill is more suited for the task on hand due to its different specifications. In turn, an alert may be issued to the user, either via an interface on the first or second power drill or via an alerts application on the user's smart phone to alert the user of the possibility to exchange power drills for the work piece currently being worked on.

As mentioned earlier, in some examples, the control data may also be communicated between each of the power tools within the mesh network 600. The control data may include any data that can actuate or otherwise control the operation of the power tool, including, but without limitations:
- Actuating or stopping the motor or driving mechanism of the power tool so as to operate the power tool;
- Adjusting the speed of the motor or driving mechanism of the power tool when it is in operation;
- Actuating or terminating certain specific functions of the power tool;
- Actuating or terminating certain indicators or diagnostic functions of the power tool; and,
- Requesting a power tool to perform certain communications, either with a power tool, to a cloud based server, mobile phone or computer.

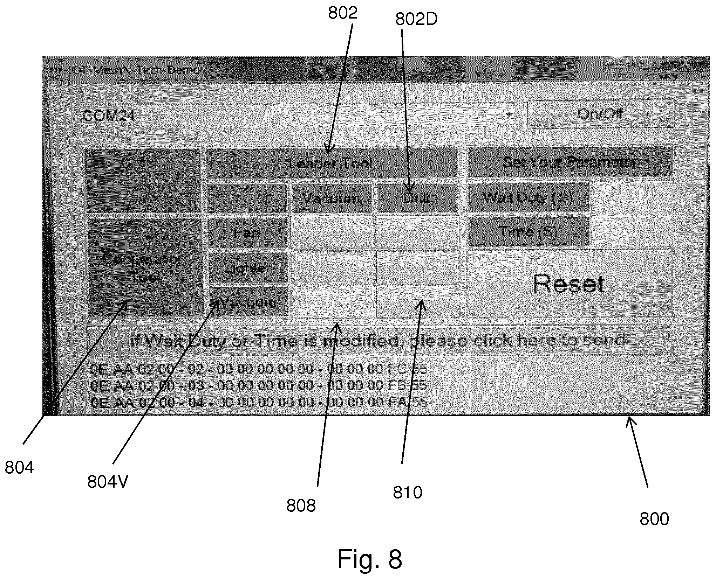

In these examples, a power tool may, via the mesh network 600, issue control commands to one or more other power tools connected on the mesh network 600. These control data may be to operate the other power tools or otherwise control the other power tools. Preferably, this is to complement the operation of the power tool itself. As an example, if a user is using a power saw, the power saw may, issue an actuation command to a nearby blower vac device so as to vacuum any dust created by the saw. Further examples of such interactions between the power tools on the mesh network 600 and how this can be set up by a user will be described below with reference to Figure 8.

Preferably, the power tools that are able to control each other are authorized on the mesh network 600 before the control commands are able to be processed. This is to ensure the power tools would not operate without a user's permission. Thus the user may authenticate specific power tools within his or her possession before any specific power tool can communicate and/or control or be controlled by another power tool as shown in further details with reference to Figure 8.

With reference to Figure 7, there is provided an illustration of an example global mesh network 700 whereby power tools that are in individual mesh networks 600 can be connected or communicate with other mesh networks 600 to form a global mesh network 700. In this example, the power tools described above, may have a communication interface 514 that can operate to connect directly with another power tool without any communication intermediary in between the power tools to form a local mesh network 600. Preferably, the communication interface 514 is also arranged to include communications arrangements so as to allow the communication interface 514 to communicate with a smartphone or a computer, or directly with a telecommunications provider via a wired connection, or a wireless connection such as Bluetooth, RFID, Zigbee, WiFi or cellular networks, with the communications interface 514 choosing the different communication protocols based on availability, quality of service, and user settings.

In this example, a power tool can thus connect itself to a mesh network 600 by connecting to another power tool whilst also be arranged to route traffic via a local area network (LAN) or wide area network (WAN) to another mesh network 600. In turn, which is not shown in Figure 7, mesh networks 600 can thus overlap with multiple devices within a mesh network 600 being connected to one or more other mesh networks 600 at the same time. The net result is that a local mesh network 600 can thus connect to a much larger global mesh network 700 with multiple power tools (or nodes) which are connected to each of the different mesh networks 600.

Such an arrangement can provide significant advantageous in that operational data relating to each power tool, as well as within the context to which they operate, such as geography, time, user type or work load as measured, can be collected for subsequent decision making for the design and development of new tools. Furthermore, owners of power tools with whom their working environment spreads out over large areas are able to continue to track and control the tools from afar, without any concern as to whether the power tool is within a local communication range. This would be particularly useful for companies that would send their workers to different worksites in many geographical locations, whilst allow the company to track the usage of their power tools to determine working hours, conditions and tool selections.

With reference to Figure 8, there is illustrated an example screenshot of a power tool configuration interface 800 for a tool to tool automation system whereby a user can manipulate the configuration of their power tools to control and co-ordinate the connections and communications of all of their power tools within an localised mesh network and thereby provide a tool to tool automation system or method for the user.

As shown in Figure 8, the interface 800, which is a computer based interface that can be implemented and processed on a smartphone, tablet computer, computer, a power tool control box or on an interface of one of the power tools that is connected to one or more power tools in the localised mesh network. The localised mesh network may include, for example, all of the user's power tools or electronic communication devices that are connected together, or a wider network of power tools whereby a portion of these connected power tools are authenticated to be within a localised control group.

In an example, this example interface 800 of a tool to tool automation system is arranged to allow a user to link two or more power tools together such that the two or more power tools may operate together to perform a specific task. The procedures required to control the two or more power tools together so as to allow them to operate together may include two example concepts, the first is that the two or more power tools would trigger specific events during their operation, usually, but not limited to, when a specific power tool would operate or terminate in operation, which in turn are events that may trigger the operation or termination of another linked power tool.

The second concept which assists in the operation of this tool to tool automation system is a series of rules which are pre-determined or pre-set by a user of the power tools. These rules relate to which events or conditions of specific tools that would in turn trigger the operation or termination of another power tool. Part of these rules would be pre-set from the factory and may relate to safety, and thus a set of safety related rules may be preset so as to prevent the localised mesh of power tools to operate in a dangerous manner or to comply with relevant design and safety requirements.

As shown in Figure 8, a matrix of "leader tools" and "cooperation tools" 808 is set up within a grid interface whereby users can choose which are the "leader tools" and "cooperation tools". The intersection of the "leader tools" columns and the "cooperation tools" are linkage boxes 810 whereby a user can link the "leader tools" with the "cooperation tools" and in turn, places a command to trigger the "cooperation tool" when an event is detected for the linked "leader tools", e.g. such as when a "leader too" is operated by a user. Thus for example, a user can set that a drill, which is a "leader tool" in the matrix 808, to also drive a blower vac (a.k.a as vacuum) which is a "cooperation tool" by selected the link box 810. In turn, when a user presses the trigger to start the drill, the blower vac would then also operate and providing a synergistic effect of vacuuming debris that may be created by the power drill.

Similarly, the vacuum, which is also a "leader tool" in its own right, when it is triggered by a user, and not necessarily triggered when it is a "cooperation tool", may also be set to trigger the fan tool, which is in this example marked as a "cooperation tool" within this matrix.

Alternative settings of the "leader tools" and "cooperation tools" matrix 800 can be created by the user, who would be given the freedom to manipulate this matrix 800 as per their desired. Additionally, parameters 812 may also be set on the interface such as "waiting times" or any other conditions so as to set the manner in which the "leader tool" and "cooperation tool" would operate together.

Although not required, the examples and embodiments described with reference to the Figures can be implemented as an application programming interface (API) or as a series of libraries for use by a developer or can be included within another software application, such as a terminal or personal computer operating system or a portable computing device operating system. Generally, as program modules include routines, programs, objects, components and data files assisting in the performance of particular functions, the skilled person will understand that the functionality of the software application may be distributed across a number of routines, objects or components to achieve the same functionality desired herein.

It will also be appreciated that where the methods and systems of the present invention are either wholly implemented by computing system or partly implemented by computing systems then any appropriate computing system architecture may be utilised. This will include stand alone computers, network computers and dedicated hardware devices. Where the terms "computing system" and "computing device" are used, these terms are intended to cover any appropriate arrangement of computer hardware capable of implementing the function described.

Any reference to prior art contained herein is not to be taken as an admission that the information is common general knowledge, unless otherwise indicated.

## Claims

1. Use of an electrical apparatus, wherein the electrical apparatus is a power tool (100) comprising a controller module (102) arranged to control an output of a functional module of the electrical apparatus, wherein the controller module (102) is further arranged to communicate with an external communication device, wherein the external communication device is a battery charger (202), for switching the battery charger (202) to a rapid charging mode of operation for recharging another battery pack currently being mounted to the battery charger (202), wherein the power tool (100) communicates via a Bluetooth network to the battery charger (202) indicating a battery low status of the battery pack (104) being mounted to the power tool (100) thereby triggering the battery charger (202) to switch to the rapid charging mode of operation for recharging another battery pack currently being mounted to the battery charger (202).

2. Use of a power tool (100) for switching a battery charger (202) to a rapid charging mode according to claim 1, wherein terminals of the battery pack (104) transmit control signals.

3. Use of a power tool (100) for switching a battery charger (202) to a rapid charging mode according to claim 2, wherein the battery pack (104) used with the power tool (100) receives data associated with the operation of the power tool (100); stores the received data; and transmits the stored data to the battery charger.

4. Use of a power tool for switching a battery charger (202) to a rapid charging mode according to claims 2 or 3, wherein the battery charger comprises a communication interface.

5. Use of a power tool (100) for switching a battery charger (202) to a rapid charging mode according to any of the preceding claims, wherein the power tool (100) comprises an antenna (118).

6. Use of a power tool (100) for switching a battery charger (202) to a rapid charging mode according to any of the preceding claims, wherein the power tool (100) communicates with the external device, in particular the battery charger (202) via at least one of Bluetooth, Wi-Fi, cellular network, ZIGBEE, RFID, radio wave, acoustic wave, sonic wave, and optical wave.

7. Use of a power tool (100) for switching a battery charger (202) to a rapid charging mode according to any of the preceding claims, wherein the functional module of the power tool (100) comprises at least one sensor element, wherein the at least one sensor element detects one or more parameters associated with the environment and communicates with the other modules in order to control or give a better feedback.

8. Use of a power tool (100) for switching a battery charger (202) to a rapid charging mode according to claim 7, wherein the at least one sensor is selected from: an air quality sensor, temperature sensor, a humidity sensor, a wind level sensor, a soil quality sensor, and a light intensity sensor.

## Patentansprüche

1. Verwendung eines elektrischen Geräts,
wobei das elektrische Gerät ein Elektrowerkzeug (100) ist, das ein Steuermodul (102) umfasst, das dazu ausgelegt ist, einen Ausgang eines Funktionsmoduls des elektrischen Geräts zu steuern, wobei das Steuermodul (102) ferner dazu ausgelegt ist, mit einem externen Kommunikationsgerät zu kommunizieren, wobei das externe Kommunikationsgerät ein Batterieladegerät (202) ist, um das Batterieladegerät (202) in einen Schnelllademodus umzuschalten, um einen weiteren, aktuell an dem Batterieladegerät (202) montierten Batteriepack aufzuladen, wobei das Elektrowerkzeug (100) über ein Bluetooth-Netzwerk mit dem Batterieladegerät (202) kommuniziert und dabei einen niedrigen Ladezustand des an dem Elektrowerkzeug (100) montierten Batteriepacks (104) anzeigt, wodurch das Batterieladegerät (202) veranlasst wird, in den Schnelllademodus umzuschalten, um einen weiteren, aktuell an dem Batterieladegerät (202) montierten Batteriepack aufzuladen.

2. Verwendung eines Elektrowerkzeugs (100) zum Umschalten eines Batterieladegeräts (202) in einen Schnelllademodus nach Anspruch 1,
wobei Anschlüsse des Batteriepacks (104) Steuersignale übertragen.

3. Verwendung eines Elektrowerkzeugs (100) zum Umschalten eines Batterieladegeräts (202) in einen Schnelllademodus nach Anspruch 2,
wobei der mit dem Elektrowerkzeug (100) verwendete Batteriepack (104) Daten empfängt, die dem Betrieb des Elektrowerkzeugs (100) zugeordnet sind; die empfangenen Daten abspeichert; und die abgespeicherten Daten an das Batterieladegerät überträgt.

4. Verwendung eines Elektrowerkzeugs zum Umschalten eines Batterieladegeräts (202) in einen Schnelllademodus nach den Ansprüchen 2 oder 3,
wobei das Batterieladegerät eine Kommunikationsschnittstelle umfasst.

5. Verwendung eines Elektrowerkzeugs (100) zum Umschalten eines Batterieladegeräts (202) in einen Schnelllademodus nach einem der vorstehenden Ansprüche,
wobei das Elektrowerkzeug (100) eine Antenne (118) umfasst.

6. Verwendung eines Elektrowerkzeugs (100) zum Umschalten eines Batterieladegeräts (202) in einen Schnelllademodus nach einem der vorstehenden Ansprüche,
wobei das Elektrowerkzeug (100) mit dem externen Gerät, insbesondere dem Batterieladegerät (202), über zumindest eines der folgenden Mittel kommuniziert: Bluetooth, Wi-Fi, Mobilfunknetz, ZIGBEE, RFID, Funkwellen, akustische Wellen, Schallwellen und optische Wellen.

7. Verwendung eines Elektrowerkzeugs (100) zum Umschalten eines Batterieladegeräts (202) in einen Schnelllademodus nach einem der vorstehenden Ansprüche,
wobei das Funktionsmodul des Elektrowerkzeugs (100) zumindest ein Sensorelement umfasst, wobei das zumindest eine Sensorelement einen oder mehrere der Umgebung zugeordnete Parameter erfasst und mit den weiteren Modulen kommuniziert, um eine Ansteuerung sicherzustellen bzw. eine bessere Rückmeldung zu liefern.

8. Verwendung eines Elektrowerkzeugs (100) zum Umschalten eines Batterieladegeräts (202) in einen Schnelllademodus nach Anspruch 7,
wobei der zumindest eine Sensor ausgewählt ist aus: einem Luftqualitätssensor, einem Temperatursensor, einem Feuchtigkeitssensor, einem Windstärkesensor, einem Bodenqualitätssensor und einem Lichtintensitätssensor.

## Revendications

1. Utilisation d'un appareil électrique, dans laquelle
l'appareil électrique est un outil électrique (100) comprenant un module de commande (102) agencé pour commander la sortie d'un module fonctionnel de l'appareil électrique, '
le module de commande (102) est en outre agencé pour communiquer avec un dispositif de communication externe,
le dispositif de communication externe est un chargeur de batterie (202), afin de faire passer le chargeur de batterie (202) en mode de charge rapide pour recharger un autre bloc-batterie actuellement monté sur le chargeur de batterie (202),
l'outil électrique (100) communique via un réseau Bluetooth avec le chargeur de batterie (202) pour signaler un état de batterie faible du bloc-batterie (104) monté sur l'outil électrique (100), déclenchant ainsi le passage du chargeur de batterie (202) en mode de charge rapide pour recharger un autre bloc-batterie actuellement monté sur le chargeur de batterie (202).

2. Utilisation d'un outil électrique (100) pour faire passer un chargeur de batterie (202) en mode de charge rapide selon la revendication 1,
dans laquelle les bornes du bloc-batterie (104) transmettent des signaux de commande.

3. Utilisation d'un outil électrique (100) pour faire passer un chargeur de batterie (202) en mode de charge rapide selon la revendication 2,
dans laquelle le bloc-batterie (104) utilisé avec l'outil électrique (100) reçoit des données associées au fonctionnement de l'outil électrique (100) ; stocke les données reçues ; et transmet les données stockées au chargeur de batterie.

4. Utilisation d'un outil électrique pour faire passer un chargeur de batterie (202) en mode de charge rapide selon l'une des revendications 2 ou 3,
dans laquelle le chargeur de batterie comprend une interface de communication.

5. Utilisation d'un outil électrique (100) pour faire passer un chargeur de batterie (202) en mode de charge rapide selon l'une des revendications précédentes,
dans laquelle l'outil électrique (100) comprend une antenne (118).

6. Utilisation d'un outil électrique (100) pour faire passer un chargeur de batterie (202) en mode de charge rapide selon l'une des revendications précédentes,
dans laquelle l'outil électrique (100) communique avec le dispositif externe, en particulier avec le chargeur de batterie (202), via au moins l'un des moyens suivants : Bluetooth, Wi-Fi, réseau cellulaire, ZIGBEE, RFID, ondes radio, ondes acoustiques, ondes sonores et ondes optiques.

7. Utilisation d'un outil électrique (100) pour faire passer un chargeur de batterie (202) en mode de charge rapide selon l'une des revendications précédentes,
dans laquelle le module fonctionnel de l'outil électrique (100) comprend au moins un élément capteur,
ledit au moins un élément capteur détecte un ou plusieurs paramètres associés à l'environnement et communique avec les autres modules afin d'assurer un contrôle ou de fournir un meilleur retour d'information.

8. Utilisation d'un outil électrique (100) pour faire passer un chargeur de batterie (202) en mode de charge rapide selon la revendication 7,
dans laquelle ledit au moins un capteur est choisi parmi : un capteur de qualité de l'air, un capteur de température, un capteur d'humidité, un capteur de vitesse du vent, un capteur de qualité du sol et un capteur d'intensité lumineuse.
